## Europäisches Patentamt

## European Patent Office

## Office européen des brevets

Veröffentlichungsnummer: **0 287 831**
**A1**

## EUROPÄISCHE PATENTANMELDUNG

Anmeldenummer: 88104697.3

Anmeldetag: 24.03.88

Int. Cl.⁴ **B64D 25/00 , B64C 1/40**

Priorität: 22.04.87 DE 3713466

Veröffentlichungstag der Anmeldung:
26.10.88 Patentblatt 88/43

Benannte Vertragsstaaten:
FR GB

Anmelder: **Messerschmitt-Bölkow-Blohm Gesellschaft mit beschränkter Haftung**
**Robert-Koch-Strasse**
**D-8012 Ottobrunn(DE)**

Erfinder: **Rössner, Bernd**
**Lärchenweg 2**
**D-2107 Rosengarten 6(DE)**
Erfinder: **Sprenger, Wilfried**
**Buentfeld 21**
**D-2165 Issendorf(DE)**

Transportflugzeug.

Bei einem Transportflugzeug, das zur Beförderung von Passagieren und/oder Frachtgut dient, ist der Kabinenbereich in einzelne Abschnitte unterteilt, zwischen denen feuerfeste bzw. feuerhemmende Trenneinrichtungen angeordnet sind. Die Trenneinrichtungen bestehen dabei aus Trennwänden, die mit einer feuerfesten Außenbeschichtung versehen sind, aus feuerfesten Türen sowie aus Vorhängen aus feuerfesten Materialien.

EP 0 287 831 A1

## Transportflugzeug

Die Erfindung betrifft ein Transportflugzeug zur Beförderung von Passagieren und/oder Frachtgut.

Eine der häufigsten Unfallursachen im Bereich der zivilen Luftfahrt, die dann vielfach auch mit Verlusten an Menschenleben verbunden ist, ist das Ausbrechen eines Feuers an Bord eines Flugzeuges, entweder während des Fluges oder aber bei einer Notlandung. Selbst in solchen Fällen, in denen der Brandherd im Kabinenbereich liegt, sind dabei die Möglichkeiten zu einer wirksamen Bekämpfung bzw. Eindämmung des Feuers zumeist nur unzulänglich.

Aufgabe der Erfindung ist es daher, den Kabinenbereich von Transportflugzeugen so auszubilden, daß der Schutz der Insassen vor Brandeinwirkungwen erheblich verbessert wird und zugleich die Möglichkeiten für eine erfolgreiche Brandbekämpfung wesentlich erweitert werden.

Die Erfindung löst diese Aufgabe dadurch, daß der Kabinenbereich des Flugzeuges in einzelne Abschnitte unterteilt ist, zwischen denen verschließbare, feuerfeste bzw. feuerhemmende Trenneinrichtungen angeordnet sind. Dadurch ist es möglich, einen im Kabinenbereich ausgebrochenen Brand auf einen möglichst engen Raum zu begrenzen und die weitere Ausbreitung des Feuers entweder ganz zu verhindern oder aber sie einzuschränken bzw. zu verlangsamen. Zugleich ermöglicht es die erfindungsgemäße Maßnahme auch, die Ausbreitung von Rauch und Verbrennungsgasen zu unterbinden. Weiterhin wird durch die Abschirmung des Brandbereiches und damit der Verbrennungshitze ein Überspringen der Flammen auch auf andere Kabinenbereiche verhindert. Schließlich ist es durch die erfindungsgemäße Maßnahme möglich, daß der Brandherd durch das Bordpersonal auch mit Löschmitteln bekämpft werden kann, die für den Menschen schädlich sind.

In den weiteren Ansprüchen sind konstruktive Maßnahmen angegeben, durch die sich eine besonders wirksame Unterteilung des Kabinenbereiches in einzelne Brandabschnitte erzielen läßt, ohne daß hierdurch die normale Gebrauchstüchtigkeit eines derartigen Transportflugzeuges nachteilig beeinflußt wird.

Im folgenden soll die Erfindung anhand eines in der Zeichnung dargestellten Ausführungsbeispiels näher erläutert werden. Es zeigen:

Fig. 1 die Fluggastkabine eines Transportflugzeuges gemäß der Erfindung in Draufsicht,

Fig. 2 bis 4 jeweils Ansichten der mit II bis IV gekennzeichneten Bereiche der Anordnung gemäß Fig. 1,

Fig. 5 eine Detaildarstellung der Anordnung nach Fig. 4,

Fig. 6 einen seitlichen Schnitt durch die Kabine im Bereich der Anordnung nach Fig. 4,

Fig. 7 eine Darstellung der Anordnung nach Fig. 4 in geschlossenem Zustand und

Fig. 8 den Aufbau einer feuerfesten Trennwand.

In den Figuren sind jeweils gleiche Bauteile mit den gleichen Bezugszeilen versehen.

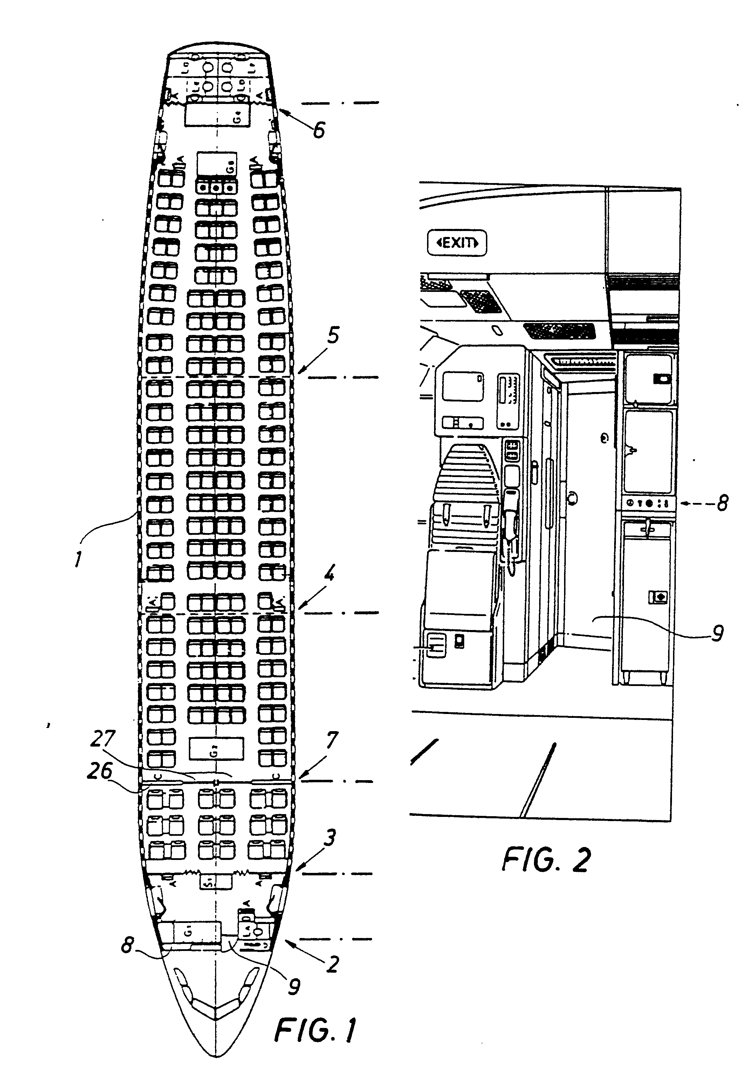

Die in Fig. 1 dargestellte Kabine 1 eines Verkehrsflugzeuges ist durch eine Anzahl von feuerfesten bzw. feuerhemmenden Trenneinrichtungen 2 bis 7 in einzelne Abschnitte unterteilt, die bei Auftreten eines Brandes im Kabinenbereich verschließbar sind. Der Aufbau dieser Trenneinrichtungen 2 bis 7 ist in den Figuren 2 bis 8 dargestellt und soll nachfolgend näher erläutert werden.

Die in Fig. 2 dargestellte Trenneinrichtung 2 bildet die Abgrenzung der Fluggastkabine 1 gegenüber dem Cockpit und besteht aus einer Trennwand 8, die eine Beschichtung aus einem feuerfesten Material aufweist, sowie aus einer Drehtür 9, die die gleiche Beschichtung aufweist. Der Aufbau der Trennwand 8, die bei der Darstellung in Fig. 2 durch Einbauten verdeckt ist, ist dabei in Fig. 8 dargestellt und besteht aus einem Wabenkern 10, der mit einem feuerfesten Isolierwerkstoff verfüllt ist, einer bzw. mehreren Decklagen 11 sowie jeweils einer feuerfesten Außenschicht 12.

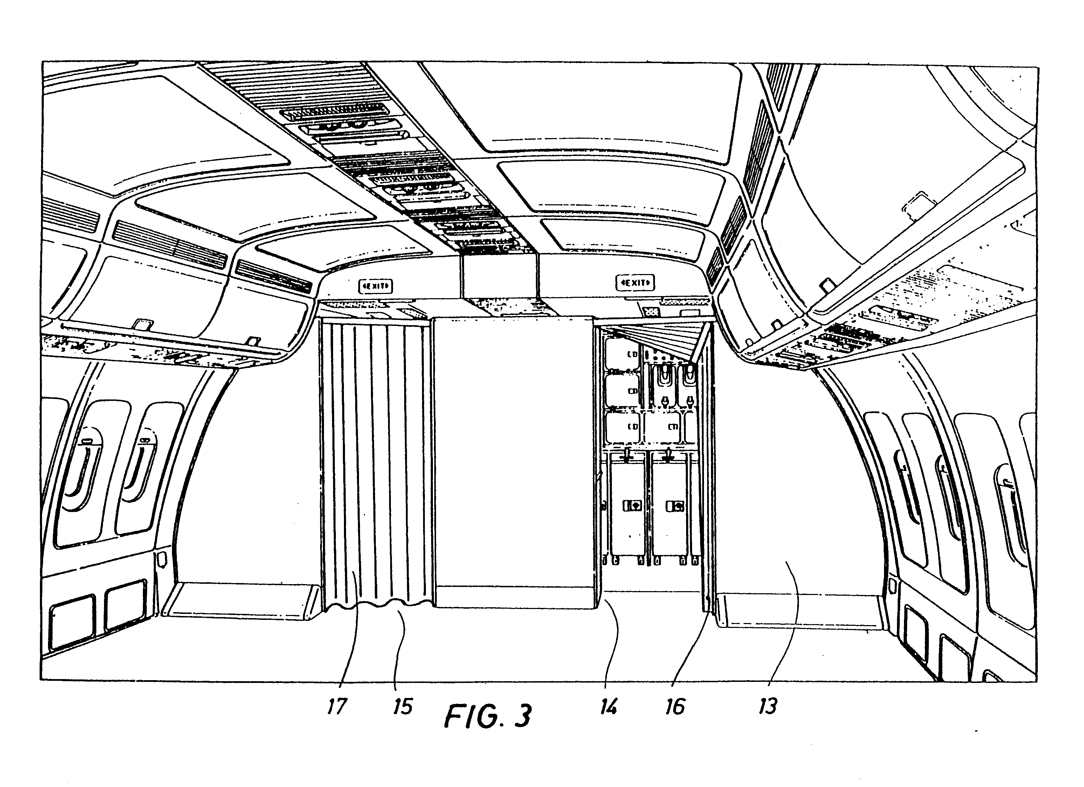

Fig. 3 stellt im Detail die Trenneinrichtung 3 zwischen dem vorderen Eingangsbereich der Fluggastkabine 1 und dem vordersten Sitzbereich dar. Diese Trenneinrichtung 3 besteht ebenfalls wieder aus einer feuerabweisenden Trennwand 13, die den gleichen Aufbau wie die Trennwand 8 aufweist und der in Fig. 8 dargestellt. ist. Zwei in der Trennwand 13 vorgesehene Durchlässe 14 und 15 sind jeweils durch Vorhänge 16 und 17 verschließbar, die aus einem feuerfesten Material, in diesem Fall einem Mineralfasergewebe, bestehen.

Den gleichen Aufbau wie die vorstehend beschriebene Trenneinrichtung 3 weist im Prinzip auch die Trenneinrichtung 7 auf, die den hinteren Teil der Fluggastkabine 1 zum Toilettenbereichen hin abschließt.

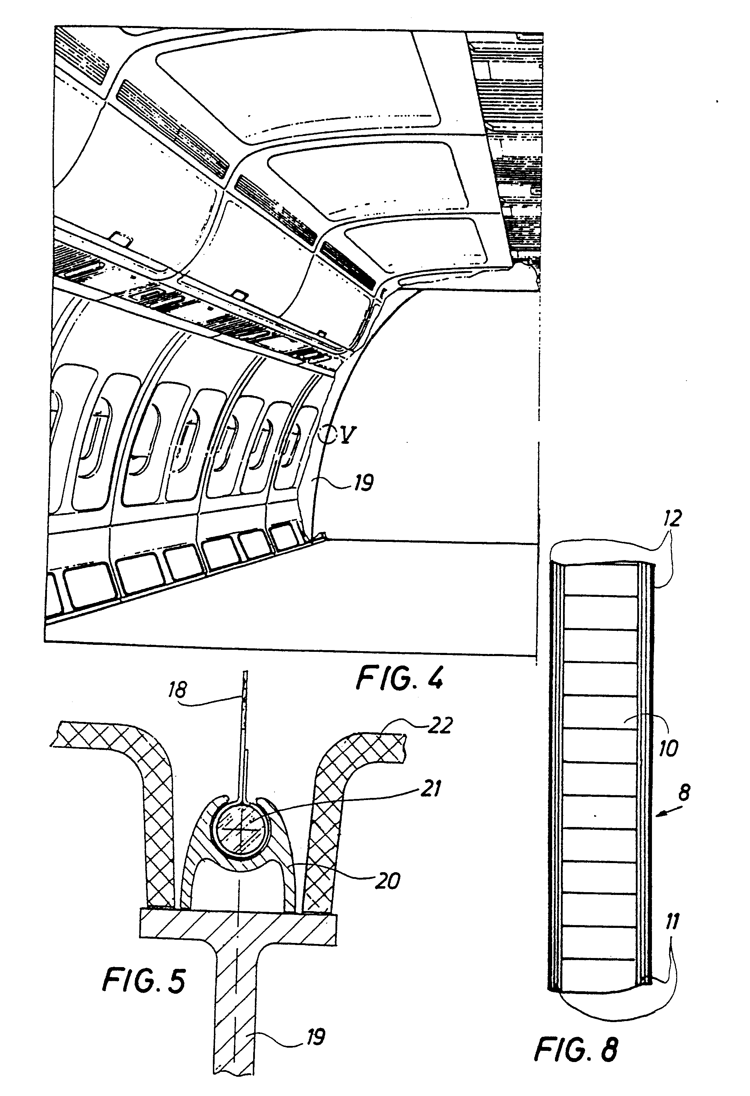

Im Mittelteil der Fluggastkabine 1 sind zwei weitere Trenneinrichtungen 4 und 5 angeordnet, die indentisch aufgebaut sind und von denen eine im Detail in den Fig. 4 bis 7 dargestellt ist. Die Trenneinrichtung 4 besteht dabei ebenfalls aus einem Vorhang 18 aus einem feuerfesten Mineralgewebe, der aber im Gegensatz zu den Vorhängen 16 bzw. 17 den gesamten Querschnitt der Fluggastkabine 1 abzudecken vermag. Der Vorhang 18 ist dabei an einem Spant 19 seitlich geführt, wobei diese Führung aus einer Profilschiene 20 aus Leichtmetall sowie einem darin eingelegten Tau 21 aus feuerfesten Fasern besteht, um das der Vorhand 18 gezogen ist und das in der Profilschiene 20 in vertikaler Richtung gleitet. Die Profilschiene 20 ist, wie weiterhin aus Fig. 5 hervorgeht, in der Seitenverkleidung 22 der Fluggastkabine 1 versenkt angeordnet.

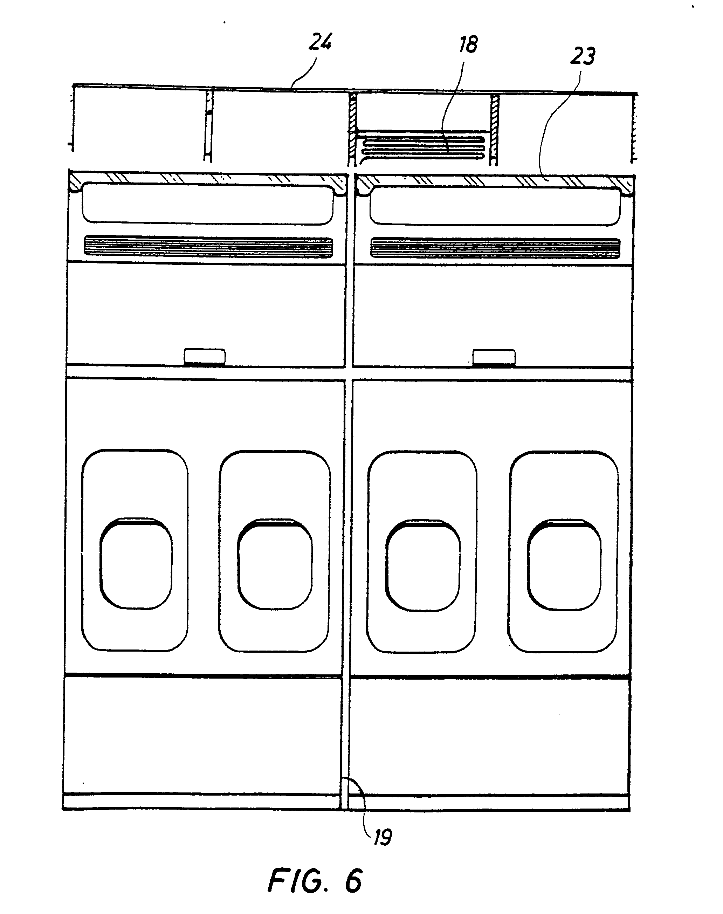

Aus dem in Fig. 6 dargestellten vertikalen Längsschnitt durch die Fluggastkabine 1 im Bereich der Trenneinrichtung 4 geht hervor, daß der Vorhang 18 im Normalfall im Bereich zwischen der Deckenverkleidung 23 der Fluggastkabine 1 und der Außenhaut 24 des Flugzeuges zusammengefaltet verstaut ist und aus dieser Position erst bei Brandgefahr in seine Einsatzposition, in der er als Trenneinrichtung wirksam ist, herabgelassen wird.

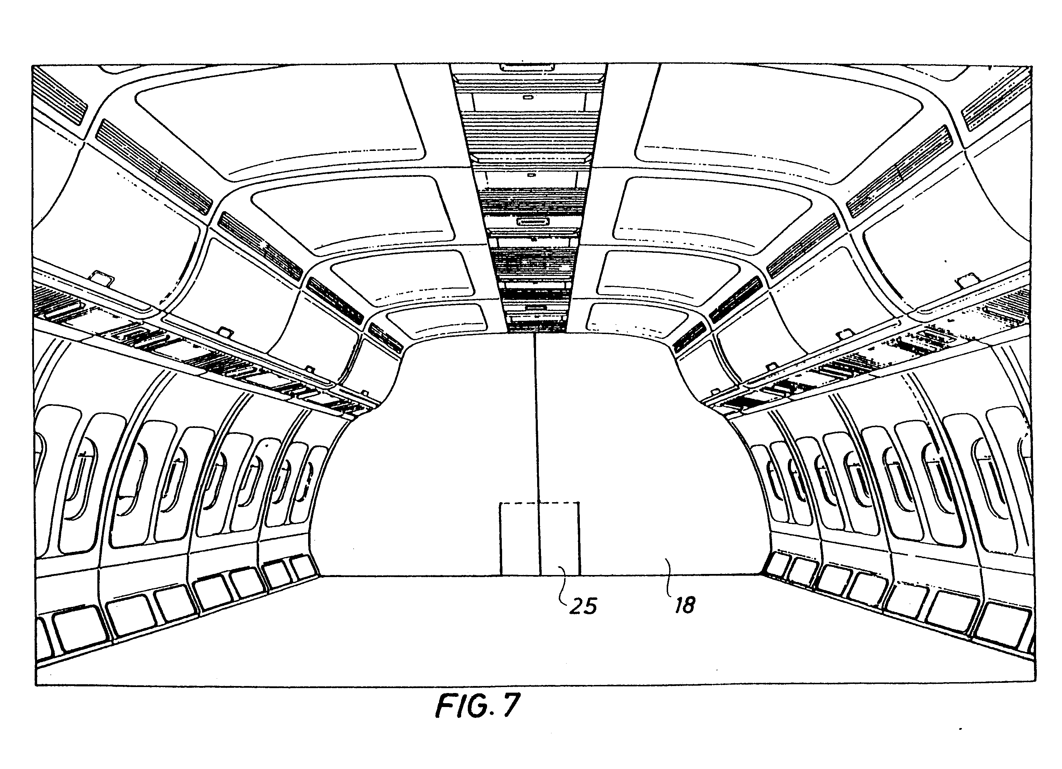

In Fig. 7 ist die vorstehend beschriebene Anordnung im geschlossenen Zustand dargestellt. Aus dieser Figur ist ersichtlich, daß der Vorhang 18, der auch, wie hier dargestellt, aus zwei Einzelteilen bestehen kann, im mittleren Bereich eine auf Kriechhöhe beschränkte, verschließbare Öffnung 25 als Durchlaß aufweist. Es können aber auch, sofern die Fluggastkabine 1 zwei Kabinengänge aufweist, zwei derartige Durchlaßöffnungen, jeweils im Gangbereich, vorgesehen werden. In jedem Fall ist dieser Durchlaß 25 möglichst niedrig ausgeführt, um den Durchtritt von Rauch und Verbrennungsgasen möglichst gering zu halten.

Schließlich ist eine weitere Trenneinrichtung 7 vorgesehen, die aus einer ortsfesten Trennwand 26 besteht, die analog zur Trennwand 8 aufgebaut ist und die im mittleren Bereich einen breiten Durchlaß aufweist. Letzterer ist durch eine zweiteilige Falttür 27 aus feuerfestem Material verschließbar.

Anzumerken ist, daß sich in allen Fällen die feuerfeste Abschottung der einzelnen Abschnitte der Fluggastkabine 1 auch auf den Raum oberhalb der Kabinendecke bis hin zur Außenhaut sowie in das Rußbodengerüst hinein erstreckt. Zur Erhöhung der Wirksamkeit der vorstehend beschriebenen Trenneinrichtungen ist es weiterhin besonders vorteilhaft, wenn diese mit weiteren Einrichtungen zur Feuerbekämpfung in den jeweiligen Abschnitten kombiniert werden. Hierfür eignen sich insbesondere
- die Absperrung der Frischluftzufuhr,
- die Ableitung von Rauch und Verbrennungsgasen über das Abluftsystem,
- die Anordnung von Sensoren für Temperatur und Rauch und deren Ergänzung durch zusätzliche Sensoren für spezielle Verbrennungsgase in der Abluftleitung zum Zweck der frühzeitigen Erkennung und Lokalisierung von Bränden,
- die Anordnung von Sprinkler-Sprüheinrichtungen an besonders feuergefährdeten Stellen, an denen andererseits Wasser verfügbar ist, wie Küche und Toiletten,

- die Versorgung der Flugzeuginsassen mit Atemluft über die Sauerstoffmasken aus dem Frischluftsystem sowie
- Anschlußmöglichkeiten für Atemmasken an das Klimasystem.

Insgesamt wird durch die vorstehend beschriebene Anordnung erreicht, daß im Kabinenbereich entstehende Brände mit besserer Aussicht auf Erfolg bekämpft werden können und daß die Zeitspanne zwischen der Erkennung eines Brandes und der unmittelbaren Gefährdung der Flugzeuginsassen und des Flugzeuges entscheidend verlängert wird.

## Bezugszeichenliste

1 Kabine
2-7 Trenneinrichtungen
8 Trennwand
9 Drehtür
10 Wabenkern
11 Deckschichten
12 Außenschichten
13 Trennwand
14,15 Durchlaß
16,17 Vorhang
18 Vorhang
19 Spant
20 Profilschiene
21 Tau
22 Seitenverkleidung
23 Deckenverkleidung
24 Außenhaut
25 Durchlaß
26 Trennwand
27 Falttür

## Ansprüche

1. Transportflugzeug zur Beförderung von Passagieren und/oder Frachtgut, dadurch gekennzeichnet, daß der Kabinenbereich (1) des Flugzeuges in einzelne Abschnitte unterteilt ist, zwischen denen verschließbare, feuerfeste bzw. feuerhemmende Trenneinrichtungen (2-7) angeordnet sind.

2. Transportflugzeug nach Anspruch 1, dadurch gekennzeichnet, daß die Trenneinrichtungen (2) als mit Türen (9) versehene feuerhemmende Trennwände (8) ausgebildet sind.

3. Transportflugzeug nach Anspruch 2, dadurch gekennzeichnet, daß die Trennwände (8) aus einem Wabenkern (10) bestehen, der mit einem feuerfesten Isoliermaterial verfüllt und mit einer feuerfesten Außenschicht (12) versehen ist.

4. Transportflugzeug Anspruch 1, dadurch gekennzeichnet, daß die Trenneinrichtungen (3.6) als feuerhemmende Trennwand (13) ausgebildet sind, die mit Durchlässen (14,15) versehen ist, welche durch feuerfeste Vorhänge (16,17) verschließbar sind.

5. Transportflugzeug nach Anspruch 1, dadurch gekennzeichnet, daß die Trenneinrichtung (7) als aus einem feuerfesten Material bestehende Falttür (27) ausgebildet ist.

6. Transportflugzeug nach Anspruch 1, dadurch gekennzeichnet, daß die Trenneinrichtungen (4,5) als an einem Spant (19) gehalterte feuerfeste Vorhänge (18) ausgebildet sind.

7. Transportflugzeug nach Anspruch 4 oder 6, dadurch gekennzeichnet, daß die Vorhänge (16,17,18) aus einem feuerfesten Mineralfasergewebe bestehen.

8. Transportflugzeug nach Anspruch 6 oder 7, dadurch gekennzeichnet, daß die Vorhänge (18) oberhalb der Deckenverkleidung (23) der Kabine (1) angeordnet sind.

9. Transportflugzeug nach einem der Ansprüche 6 bis 8, dadurch gekennzeichnet, daß die Vorhänge (18) in einer am jeweiligen Spant (19) angeordneten Profilschiene (20) geführt sind.

10. Transportflugzeug nach einem der Ansprüche 1 bis 9, dadurch gekennzeichnet, daß die Trenneinrichtungen (2-7) jeweils wenigstens eine auf Kriechhöhe begrenzte, verschließbare Durchlaßöffnung (25) aufweisen.

FIG. 1

FIG. 2

FIG. 3

17    15    14    16    13

0 287 831

FIG. 4

FIG. 5

FIG. 8

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 121 790 (GRAHAM)<br>* Insgesamt *<br>--- | 1,2,4-6 ,8,9 | B 64 D 25/00<br>B 64 C 1/40 |
| X | WO-A-8 404 727 (BOEING)<br>* Seite 1, Zeilen 6-11; Seite 11, Zeile 20 - Seite 12, Zeile 29 *<br>--- | 3,7 | |
| A | WO-A-8 503 032 (BOEING)<br>----- | | |

|  |  |  | RECHERCHIERTE SACHGEBIETE (Int. Cl.4) |
|---|---|---|---|
| | | | B 64 C<br>B 64 D |

Der vorliegende Recherchenbericht wurde für alle Patentansprüche erstellt

| Recherchenort | Abschlußdatum der Recherche | Prüfer |
|---|---|---|
| DEN HAAG | 27-07-1988 | HAUGLUSTAINE H.P.M. |

EPO FORM 1503 03.82 (P0403)